# EUROPÄISCHE PATENTSCHRIFT

(11) **EP 1 255 099 B1**
(45) Veröffentlichungstag und Bekanntmachung des Hinweises auf die Patenterteilung: **04.07.2007**
(21) Anmeldenummer: 02009994.1
(22) Anmeldetag: 04.05.2002
(51) Int. Cl.: G01L 9/04, G01L 23/18

(54) **Drucksensor zur Druckerfassung in einem Motorbrennraum sowie Verfahren zu dessen Herstellung**
Pressure sensor for picking up the pressure in a combustion area of an engine and procedure for its manufacturing
Capteur de pression pour capter la pression dans la chambre de combustion d'un moteur et son procédé de fabrication

(30) Priorität: 04.05.2001 DE 10121680; 01.02.2002 DE 10203952; 18.03.2002 DE 10211992
(43) Veröffentlichungstag der Anmeldung: 06.11.2002
(73) Patentinhaber: Trafag AG, 8708 Männedorf (CH)
(72) Erfinder: Merhar, Thomas, 8708 Männedorf (CH); Zeisel, Dieter, 8127 Forch (CH)
(74) Vertreter: Kastel, Stefan

(56) Entgegenhaltungen:
- US-A- 3 857 287
- US-A- 4 382 377
- US-A- 5 199 303
- US-A- 5 703 282

## Beschreibung

Die Erfindung betrifft einen Drucksensor zur Druckerfassung in einem Brennraum einer Verbrennungskraftmaschine während des Betriebs der Verbrennungskraftmaschine, nach den Oberbegriffen der beigefügten Ansprüche 1 und 16, wie er aus der DE 41 06 102 A1 bekannt ist. Außerdem betrifft die Erfindung ein Verfahren zum Herstellen eines solchen Drucksensors sowie eine Vorrichtung zur Erfassung des Druckes in einem Brennraum einer Verbrennungskraftmaschine sowie eine mit einer solchen Vorrichtung versehene Verbrennungskraftmaschine, die jeweils wenigstens einen solchen Drucksensor enthalten.

Technologischer Hintergrund der Erfindung ist die Druckerfassung in einem Brennraum einer Verbrennungskraftmaschine während deren Lauf, also beispielsweise die Erfassung des Druckes in dem Motorzylinder eines Kolbenmotors wie beispielsweise eines Otto- oder insbesondere eines Diesel-Motors. Zu diesem Zweck liefert die Fa. Kistler zur Zeit sehr teuere (mehrere 1.000,00 Euro pro Stück) Drucksensoren, die hochgenaue Überwachungsmöglichkeiten liefern. Die Drucksensoren beruhen auf piezo-elektrischen Meßsystemen und sind praktisch nur in Motorenprüfständen einsetzbar. Auch die Fa. Lehmann und Michels liefert unter dem Namen "Premet" einen Drucksensor, der aber ebenfalls relativ teuer, unhandlich und zu wenig langzeitstabil ist, so dass er ebenfalls nur auf Motorenprüfständen oder zu Motorendiagnosezwecke einsetzbar ist. Dieser bekannte Drucksensor weist eine frontbündig eingebaute goldbeschichtete Membran mit einer Lebensdauer von nur wenigen 100 Stunden auf.

Die EP 0 175 449 A2 betrifft eine Vorrichtung zur Überwachung des Brennraumdruckes in einer Verbrennungskraftmaschine, bei der Auslenkungen der Brennraumkammer selbst zur Druckerfassung verwendet werden sollen. Hierzu wird ein Piezo-Element mit einer Außenhülle in einer Außenwand des Zylinderkopfes eines Verbrennungsmotors eingeschraubt. Ein Stößel ist mit der Brennraumwand in Kontakt und erfasst Auslenkungen der Brennraumwand. Dieser Sensor ist nur bei einem bestimmten Motortyp anwendbar und als Speziallösung für allgemeine Zwecke zu teuer.

Die EP 0 399 069 A1 betrifft ein Verfahren zur Bestimmung des Brennraumdruckes in einem Zylinder einer Verbrennungskraftmaschine mit einem Drucksensor. Diese Druckschrift befasst sich hauptsächlich mit dem Eichverfahren für einen Online-Drucksensor, über den Aufbau des Drucksensors selbst ist nichts ausgesagt.

Die EP 0 671 618 A1 betrifft eine Vorrichtung zur Überwachung des Druckes in einem Verbrennungsmotor, bei der Dehnmessschrauben so eingebaut sind, dass sie als feste Bestandteile zum Motorteil gehören.

Die US 4 232 545 betrifft einen den Brennraumgasen in einem Motorbrennraum ausgesetzten lonenstrom-Detektor.

Die US 5 062 294 betrifft eine Vorrichtung zur Druckmessung in einem Motorzylinder mit einem piezoelektrischen Sensor und einer Kompensationsschaltung zur Kompensation von Temperaturänderungen.

Die US 5 181 417 betrifft eine Vorrichtung zur Druckmessung in einem Motorzylinder mit einer besonderen Anordnung der Druckmembran eines Druckmesskörpers, derart, dass die Druckmembran abgewandt von den heißen Gasen liegt. Das Sensorelement mit der Druckaufnahmemembran ist ein monokristallines Saphirsubstrat, das mittels eines Hartlötverfahrens mit dem Metall des Sensorgehäuses verbunden ist. Als Haftvermittler für dieses Löten dienen Ti-, Mo- und Ni-Schichten.

Die US 5 195 365 betrifft einen Drucksensor zur Brennraumüberwachung in der Zylinderkopfdichtung eines Verbrennungsmotors. Dabei erfolgt eine Kühlung des Sensors durch eine nahe Anbringung an den Kühlkanälen des Motors. Die bekannte Vorrichtung umfasst einen piezoelektrischen Sensor.

Bei der aus der US 5 712 424 bekannten Vorrichtung zur Überwachung des Druckes in Verbrennungskraftmaschinen sind die Einspritzdüsen eines Dieselmotors mit Dehn-Meß-Schraubbolzen befestigt.

Gemäß der US 5 747 677 wird eine in Art einer Unterlegscheibe geformter Zylinderdrucksensor zwischen die Zündkerze und einer dieser aufnehmende Lagerfläche eingesetzt.

Die DE 37 46 430 A1 betrifft ein Verfahren zur Regelung des Zündwinkels bei Motoren mit einem Drucksensor, über dessen Aufbau allerdings nichts ausgesagt ist.

Die DE 38 11 311 C1 betrifft einen Drucksensor zur Druckerfassung im Brennraum einer Verbrennungskraftmaschine während deren Betrieb mit einem äußeren Sensorgehäuse, das an einem ersten, dem Brennraum zuzuwendenden Ende durch eine druckaufnehmende Membran verschlossen ist und in dessen Inneren ein aus V4A gebildeter Stößel und ein durch piezoelektrische Quarze gebildetes Kraftmesselement untergebracht ist. Alle Grenzflächen der dem Kraftmesselement zugewandten Ende des Stößels folgenden Bauteile sind mit Hilfe einer Klebeverbindung verbunden. Für die Klebeverbindung werden Epoxydharzkleber mit Leitsilber verwendet.

Einen ähnlichen Aufbau weist der aus der DE 40 11 132 A1 bekannte Drucksensor zur Druckerfassung im Brennraum einer Verbrennungskraftmaschine auf, wobei aber der Stempel auf Keramik gebildet ist und das Kraftmesselement nicht durch eine Klebeverbindung, sondern durch eine Schraubverbindung mit an dem Sensorgehäuse angreifenden Schraubverbindung in Kontakt gebracht ist.

Auch bei der eingangs erwähnten DE 41 06 102 A1, die den Oberbegriff der beigefügten Ansprüche 1 und 16 bildet, ist ein keramischer Stößel zwischen einer Trennmembran und einem piezoresestiven Kraftmesselement eingesetzt. Das Kraftmesselement ruht mit seiner dem Stempel entgegengesetzten Seite auf einem Keramikträger, der wiederum an dem Sensoraußengehäuse gegengelagert ist.

Die DE 197 49 814 A1 betrifft ein Verfahren zur Bestimmung des Brennraumdruckverlaufes in einer Verbrennungskraftmaschine mit einem Brennraumdrucksensor, dessen Aufbau aber nicht näher erläutert ist.

Die DE 197 55 192 A1 betrifft einen kapazitiven Drucksensor zur Druckmessung im Brennraum und Verbrennungskraftmaschinen.

Die WO 01/23855 A2 betrifft einen Hochdrucksensor für Drücke bis über 2000 bar zur Druckmessung in dem Einspritzsystem von Common-Rail-Dieselmotoren. Hierzu wird eine Messmembran durch einen hutförmigen Gehäuseeinsatz gebildet. Dieser wird zwi-schen zwei Gehäuseteilen eingespannt.

Die DE 196 45 613 A1 betrifft einen Drucksensor und ein Verfahren zu dessen Herstellung. Als Messmembran wirkt dabei ein Teil des Sensorgehäuses. Das Sensorgehäuse und die Membran sind aus Keramik (Al₂O₃) gebildet.

Die DE 41 03 706 A1 betrifft einen Drucksensor mit einer Trennmembran, einem Stößel und einem piezoresestiven Kraftmesselement in Dickschichttechnologie. Die Membran ist aus Superlegierungen aufgebaut. Ansonsten entspricht der Aufbau dem aus der DE 41 06 102 A1 bekannten Drucksensor. Das selbe gilt für den aus der DE 40 09 377 A1 bekannten Drucksensor.

Aus der DE 38 40 703 A1 ist ein Drucksensor bekannt, bei dem das Kraftmesselement direkt dem zu messenden Medium ausgesetzt ist und rückseitig über einen keramischen Tragkörper abgestützt ist. Die Keramik dient der elektromagnetischen Abschirmung. Einen ähnlichen Aufbau hat ein aus der DE 38 39 515 A1 bekannter Drucksensor.

Die DE 37 38 413 C1 betrifft einen Reifendrucksensor und die DE 37 27 221 C1 betrifft einen Drucksensor mit einem piezoelektrischen Röhrchen, das axial beaufschlagt wird. Zur Kühlung sind in dem Röhrchen Kupferlitze eingesetzt, die der Wärmeableitung dienen.

Aufgabe der Erfindung ist es, einen Drucksensor gemäß den Oberbegriffen der hier beigefügten Patentansprüche 1 und 16 derart auszubilden, dass er kostengünstig herstellbar und auch bei höheren Temperaturen langzeitstabil für den Dauereinsatz zur Überwachung in Verbrennungskraftmaschinen einsetzbar ist. Außerdem sollen ein Verfahren zur Herstellung eines solchen Drucksensors, eine Vorrichtung zur ständigen Motordruck-überwachung unter Verwendung eines solchen Drucksensors sowie eine mit einem solchen Drucksensor oder einer solchen Vorrichtung versehene Verbrennungskraftmaschine geschaffen werden.

Zur Lösung der Aufgabe schlägt die Erfindung einen Drucksensor mit den Merkmalen des beigefügten Anspruchs 1 oder 16, ein Verfahren mit den Schritten des beigefügten Anspruchs 22, eine Vorrichtung gemäß dem Anspruch 30 sowie eine Verbrennungskraftmaschine gemäß dem Anspruch 31 vor.

Vorteilhafte Ausgestaltungen der Erfindung sind Gegenstand der Unteransprüche.

Die Erfindung schafft demgemäss einen Drucksensor zur Online-Druckerfassung beim Einsatz während des Betriebes einer Verbrennungskraftmaschine mit einem äußeren Sensorgehäuse, das an einem ersten, dem Brennraum zuzuwendenden Ende durch eine druckaufnehmende Trennmembran verschlossen ist und in dessen Inneren ein keramischer Stößel und ein Kraftmesselement untergebracht ist, wobei der keramische Stößel die Auslenkungen der Trennmembran auf das Kraftmesselement überträgt. Das Kraftmesselement ist erfindungsgemäß aber nicht an dem Sensorgehäuse gegengelagert, sondern an einem ebenfalls aus Keramik gebildeten, innerhalb des Sensorgehäuses befindlichen Distanzelement befestigt. Das Distanzelement ist mit einem Ende direkt im Bereich der Trennmembran am Sensorgehäuse befestigt. Am anderen Ende trägt es das Kraftmesselement. Auslenkungen der Trennmembran werden über den keramischen Stößel übertragen. Auf diese Weise dient das Distanzelement zur vollständigen Entkoppelung der Kraftmessung von dem Sensorgehäuse. Das Kraftmesselement ist nur über keramische Materialien abgestützt, ohne dass der Kraftfluss über das Sensorgehäuse laufen würde. Auf diese Weise werden Temperaturschwankungen am Sensorgehäuse weder auf das Kraftmesselement übertragen noch wirken sie sich auf die Kraftmessung aus. Dadurch lässt sich auch ein bei hohen Temperaturen bis zu 550°C langzeitstabil einsetzbarer Drucksensor zur Online-Überwachung von Brennraumdrücken mit hohem Frequenzgang erzielen.

Erfindungsgemäß ist die Kraftmessung durch eine Metall-Nichtmetall-Verbundkonstruktion von dem Sensorgehäuse entkoppelt.

Als Distanzelement wird vorzugsweise eine Keramikhülse oder ein keramisches Röhrchen eingesetzt. Durch die Durchgangsöffnung ist dann der Stößel, vorzugsweise mit geringem Abstand, geführt.

Zur Befestigung der Nichtmetallmaterialien des Distanzelements an dem Sensorgehäuse und/oder an dem Kraftmesselement wird weiter bevorzugt ein Hartlötverfahren eingesetzt. Zum Hartlöten wird bevorzugt ein Aktivlot eingesetzt. Das Hart- oder Aktivlöten erfolgt vorzugsweise unter Vakuum bei Temperaturen von ca. 1.000°C bis 1.400°C und inbesondere bei einer Temperatur von ca. 1.200°C.

Durch solche Lötverfahren könnte zwar auch der keramische Stößel an beiden Seiten mit den entsprechend angrenzenden Elementen des Drucksensors, d.h. der Trennmembran einerseits und/oder dem Kraftmesselement andererseits, über Löten befestigt werden. Der Stößel ist bevorzugt aber einfach durch die Befestigung des Kraftmesselements über das Distanzelement an dem Sensorgehäuse sozusagen schwimmend oder einfach durch Einspannen gehalten.

Das Kraftmesselement weist bevorzugt eine Messmembran aus Keramik oder aus Stahl, insbesondere hochfestem Stahl, auf. Diese Messmembran hat dickere Befestigungsbereiche mit einem dünneren Zwischenbereich dazwischen. An einem ersten Befestigungsbereich ist die Membran an das Distanzelement befestigt, insbesondere angelötet. Mit dem zweiten Befestigungsbereich liegt die Membran bevorzugt auf dem Stößel auf. An dem dazwischen liegenden dünneren Zwischenbereich, der insbesondere ringförmig ausgebildet ist, wird die Messmembran durch Einwirkung des Stößels aufgrund Auslenkung der Trennmembran ausgelenkt und somit gedehnt. Diese Dehnung wird vorzugsweise über Dehnmessstreifen erfasst. Das Kraftmesselement ist vorzugsweise in Dünn- oder Dickschichttechnologie ausgeführt.

Das Sensorgehäuse weist in bevorzugter Ausführung außen im Bereich der Trennmembran ein Gewinde zum Einschrauben in den Brennraum eines Motors auf. Zum Einschrauben des Drucksensors ist weiter ein Werkzeugeingriffsbereich, beispielsweise ein Sechskant vorgesehen.

In bevorzugter Ausführung sind zwischen das Distanzelement und das Kraftmesselement und/oder zwischen den Stößel und das Kraftmesselement Zwischenstücke eingefügt. Vorzugsweise ist ein zwischen das Distanzelement und das Kraftmesselement eingefügtes Zwischenstück beidseits gelötet. Die Zwischenstücke können bei entsprechender Materialauswahl der Verbesserung von Lötverbindungen zwischen Metall und Keramik und/oder mit entsprechenden Temperaturausdehnungskoeffizienten zur Kompensierung von Wärmeausdehnungen dienen. Insbesondere lassen sich durch gezielte Materialauswahl minimale Versetzungen während des Lötens und beim Löten erhältliche integrierte Härtungen erreichen.

Als Keramikmaterialien kommen bevorzugt Zirkonoxid-Materialien oder Glaskeramik zum Einsatz. Ein Beispiel für eine geeignete Glaskeramik ist SiO₂46/Al₂O₃16/MgO17/K₂O10/B₂O₃7, ein unter dem Handelsnamen Macor vertriebenes Material, das spanend verarbeitbar ist, Spitzentemperaturen von 1000°C aushält, niedrige Wärmeleitfähigkeit besitzt, auch bei hoher Temperatur ein guter Wärmeisolator ist und hohe Festigkeit und Steifigkeit besitzt.

Um eine gute thermische Entkoppelung zu erzielen, schafft das Distanzelement und der Stößel eine Distanzierung von wenigstens 25 mm, vorzugsweise von wenigstens 30 mm, zu den aus Metall ausgeführten und somit gut wärmeleitenden Materialien des Sensorgehäuses am Brennraum-Ende. Das Kraftmesselement ist somit zumindest durch eine Keramik-Stärke von 25 mm, vorzugsweise von wenigstens 30 mm, von dem Brennraum und den dort herrschenden Temperaturen getrennt. Ebenfalls zum Zwecke einer guten Temperaturabschirmung kann der Spalt zwischen dem Stößel und dem Distanzelement so eng wie möglich bemessen werden, beispielsweise derart, dass nur ein Spalt von weniger als 1 mm, vorzugsweise von weniger als ca. 0,2 mm, verbleibt.

Zur weiteren Erhöhung der Lebensdauer ist die Trennmembran vorzugsweise zumindest an deren dem Brennraum zugewandten Oberflächenbereichen mit einer Schutzschicht gegen Verzundung und Oxidation versehen. Diese Oxidationsschutz-Oberflächenbeschichtung hat vorzugsweise eine Dicke von ca. 2 - 6 µm, insbesondere 3 - 4 µm, eine Mikrohärte von 2.000 - 4.000 Hv und eine Temperaturwiderstandsfähigkeit von wenigstens 600°C. Gut geeignet ist eine Titan-Aluminium-Nitrid-Beschichtung, wie sie beispielsweise von der Fa. Balzers unter dem Handelsnamen "Balinit futura" zur Beschichtung von Bohr- und Fräswerkzeugen angeboten wird.

Zur besseren Haftfähigkeit der Hartlötverbindung sind die jeweiligen Metalle der zur Entkoppelung der Kraftmessung von dem Sensorgehäuse vorgesehenen Verbundkonstruktion aus blei- und schwefelarmen Stahl (1.4571) ohne Sigma-Phase, d. h. ohne Versprödung. Vorzugsweise besteht auch der Bereich der Trennmembran und/oder des Sensorgehäuses, an welcher die Nichtmetall-Materialien der Nichtmetall-Verbundkonstruktion, also insbesondere die Keramikmaterialien des Distanzelements, angelötet sind, aus dem gleichen Material. Die Trennmembran ist dabei vorzugsweise ganzflächig mit der oben erwähnten Schutzschicht beschichtet, wobei die Verbundkonstruktion an das Sensorgehäuse angelötet ist.

Als Lotmaterial dient bevorzugt - an allen Lötstellen - ein auf einer Silber-Legierung, einer Silber-Kupfer-Legierung oder einer Kupfer-Zinn-Legierung basierendes Aktivlot. Mit Aktivlote werden die zum direkten Löten von Keramik-Keramik und Keramik-Metall-Verbindungen verwendeten Lotmittel bezeichnet. Um eine gute Benetzung von Keramik-Werk-stoffen zu erreichen, werden Aktivloten in der Regel Legierungselemente zugegeben, die an der Grenzfläche Lot-Keramik eine Reaktionsschicht bilden, durch die die Verbindung herbeigeführt wird. Vorzugsweise enthalten die hier eingesetzten Aktivlote Titan als aktives Legierungselement. Als Lötatmosphären für das Aktivlöten können reines Argon oder, wie hier bevorzugt, Vakuum eingesetzt werden. Die Löttemperatur liegt oberhalb von 800°C und beträgt, wie oben bereits erwähnt, vorzugsweise 1.200°C.

Das Herstellverfahren läuft vorzugsweise derart ab, dass zunächst der Stößel aus Keramik das Distanzelement aus Keramik mit einer Durchgangsöffnung für den Stößel, die Trennmembran aus Metall, und vorzugsweise in der oben erwähnten Weise beschichtet, ein Kraftmesselement, insbesondere gebildet mit oder aus Metall oder Keramik, und ein äußeres Sensorgehäuse bereitgestellt wird. Der durch die Durchgangsöffnung geführte Stößel wird zwischen Trennmembran und Kraftmesselement verspannt. Ein Ende des Distanzelements wird direkt oder indirekt an das Kraftmesselement angelötet und zwar durch Hartlöten und insbesondere durch Aktivlöten. Das gegenüberliegende Ende des Distanzelements wird an einem zur Anordnung in einem Brennraum einer Verbrennungskraftmaschine ausgebildeten Boden des Sensorgehäuses, der eine durch die Trennmembran zu verschließende Öffnung enthält mittels Hartlöten, insbesondere Aktivlöten, angelötet. Die einzelnen Lötschritte können dabei je nach den durch die Gegebenheiten des Sensorgehäuses sich ergebenden Anforderungen in beliebiger Reihenfolge durchgeführt werden. Vorzugsweise werden die Hartlötprozesse in einem Schritt innerhalb eines evakuierten Ofens durchgeführt, wobei die zueinander zu verlötenden Teile über aus Graphit gebildete Werkzeuge aufeinander ausgerichtet sind. Dabei können die einzelnen Teile entweder direkt aneinander gelötet werden oder indirekt unter Zwischenlage von Haftvermittlern, wie beispielsweise Kupfer-Plättchen.

Als Trennmembran wird bevorzugt eine Membran aus einem hochzähen Stahl oder einer Legierung (Stahl) mit hohem Nickelgehalt eingesetzt, der bzw. die bei 500°C bis 600°C noch gute maximale Spannungswerte liefert. Gut geeignet hierfür sind Chrom-Nickel-Legierungen, beispielsweise solche wie sie zur Zeit unter dem Namen Nimonic 90 vertrieben werden. Um einen geringen Temperaturgang zu liefern, ist die Trennmembran relativ dünn ausgeführt und ist vorzugsweise ca. 0,3 - 0,5 mm dick. Bevorzugt wird zum Zusammenbau des Sensors derart verfahren, dass der Stößel zunächst frei eingesetzt wird und lediglich zwischen der Trennmembran und dem Kraftmesselement vorgespannt wird. Dann wird die Trennmembran gemäß einer Ausführungsform mittels eines Lasers an das dem Brennraum zuzuwendende Ende des Distanzelementes oder einer Verlängerung derselben festgeschweißt, d. h. "geheftet".

Daraufhin erfolgt das Löten mittels zuvor an den Fügestellen in Form von Folien oder Pasten zugegebener Lötmittel.

Das Sensorgehäuse kann, wie im einleitend genannten Stand der Technik gut bekannt, mehrteilig aufgebaut sein.

Ein Ausführungsbeispiel der Erfindung wird im folgenden anhand der hier beigefügten Figuren näher erläutert. Darin zeigt:
- Fig. 1: einen Längsschnitt durch einen Drucksensor zur direkten, fortwährenden Druckmessung in Verbrennungsräumen eines Verbrennungsmotors (gemäß Schnitt I - I von Fig. 2);
- Fig. 2: einen Schnitt durch den Drucksensor entlang der Linie II - II von Fig. 1;
- Fig. 3: ein Diagramm des Druckverlaufes im Zylinder eines Verbrennungskraftmotors aufgetragen über den Kurbelwellenwinkel; und
- Fig. 4: ein Diagramm des Zylinderdruckes aufgetragen über das Volumen; und
- Fig. 5: einen Teilschnitt durch einen dem Brennraum zuzuwendenden Bereich eines Drucksensors in einer gegenüber der Fig. 1 abgewandelten Ausführungsform.

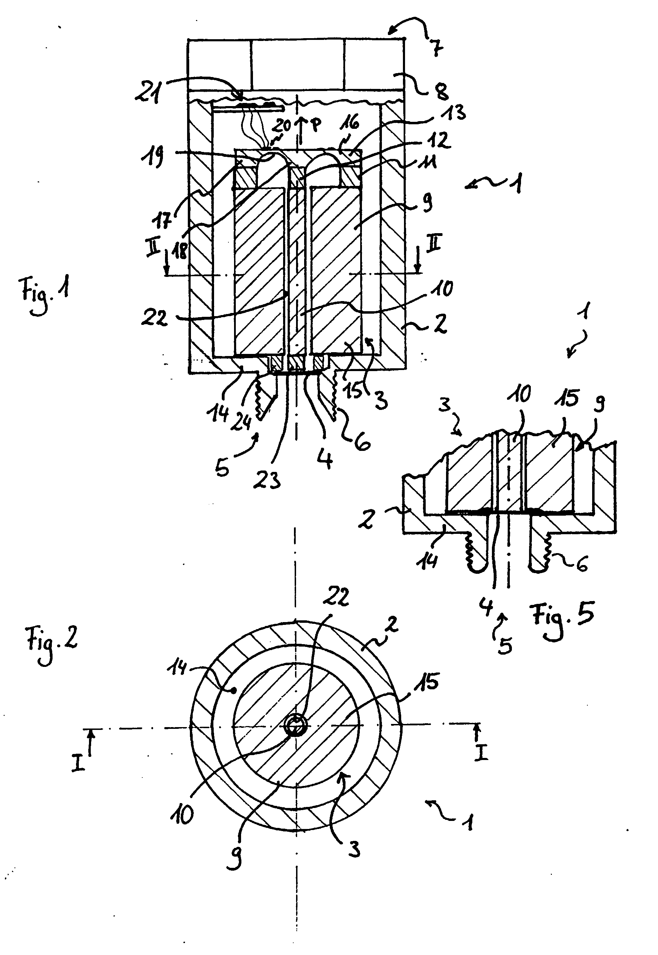

Der in den Fig. 1 und 2 sowie in leicht abgewandelter Form in Fig. 5 gezeigte Drucksensor 1 weist ein Sensoraußengehäuse 2 und eine darin untergebrachte Nichtmetall-Metall-Verbundkonstruktion 3 zur Entkoppelung einer Kraftmessung von dem Sensoraußengehäuse 2 und einer Trennmembran 4 auf.

Das Sensoraußengehäuse 2 weist an einem ersten Ende 5 ein Gewinde 6 zum Eindrehen des Drucksensors 1 in einen Brennraum einer Verbrennungskraftmaschine (nicht dargestellt) und an einem zweiten Ende 7 einer Werkzeugeingriffsausbildung, hier in Form eines Sechskants 8, auf. Mittels des Sechskantes 8 kann der Drucksensor 1 durch Angriff beispielsweise eines Drehmomentschlüssels mit seinem Gewinde 6 in den Brennraum eingedreht werden.

Die Nichtmetall-Metall-Verbundkonstruktion 3 weist ein aus (temperaturbeständigen, schlecht wärmeleitenden) Nichtmetall gebildetes Distanzelement 9, einen aus (temperaturbeständigen, schlecht wärmeleitenden) Nichtmetall gebildeten Stößel 10, ein erstes Zwischenstück, hier in Form eines metallenen Ringes 11, ein zweites Zwischenstück 12, ebenfalls vorzugsweise aus Metall gebildet und ein Kraftmesselement 13 auf. Das Distanzelement 9 ist im Bereich des ersten Endes 5 an einen Boden 14 des aus Metall gebildeten Sensorgehäuses 5 befestigt. Aufgrund dieser Nichtmetall-Metall-Verbindung wird hier von einer Nichtmetall-Metall-Verbundkonstruktion 3 gesprochen.

In dem hier vorliegenden Ausführungsbeispiel ist das Distanzelement 9 durch eine aus Keramik gebildete Hülse oder ein Keramikröhrchen 15 gebildet. Dieses Keramikröhrchen 15 ist an dem Boden 14 mittels Hartlöten befestigt. Am anderen Ende des Keramikröhrchens 15 sitzt der Ring 11, der ebenfalls mittels Hartlöten befestigt ist. Auf dem Ring 11 sitzt das Kraftmesselement, hier in Form einer Messmembran aus (hochfestem) Stahl in Dünnschichttechnologie. Es sind auch andere Kraftmesselemente möglich, so zum Beispiel auch Kraftmesselemente in Balkenform. In nicht dargestellten Ausführungsformen besteht das Kraftmesselement aus Keramik oder ist anstatt in Dünnschichttechnologie in Dickschichttechnologie aufgebaut. Das Kraftmesselement 13, also hier die Messmembran 16, weist dickere Befestigungsbereiche 17 und 18 und dünnere Zwischenbereiche 19 auf, an denen einen Verbiegung des Kraftmesselementes 13 in Richtung des Pfeiles P (axiale Richtung) ermöglicht ist. Dehnmessstreifen 20 sind zur Umwandlung einer solchen Verbiegung in ein elektrisches Signal vorgesehen. Außerdem ist bei der hier dargestellten Ausführungsform eine gedruckte Auswerteschaltung - insbesondere eine Brückenschaltung - an oder nahe des Kraftmesselementes 13 vorgesehen.

Eine Durchgangsöffnung 22 des Distanzelementes 9 wird durch den hier ebenfalls aus Keramik gebildeten Stößel 10 durchgriffen.

Am Gewinde 6 befindet sich innen eine mit Titan-Aluminium-Nitrit oder Titan-Aluminium-Nitrid beschichtete Trennmembran, die durch Drücke in dem Brennraum beaufschlagt wird. Deren Auslenkung wird über ein drittes Zwischenstück 23, den keramischen Stößel 10 und das zweite Zwischenstück 12 auf den inneren, auslenkbaren Bereich (2. Befestigungsbereich 18) des Kraftmesselementes 13, d. h. hier der Messmembran 16 übertragen. Auch die Verbindung des aus Keramik gebildeten Stößels 10 mit den Zwischenstücken 12 und 23 erfolgt über Hartlot (gelötet bei ca. 1.200°C).

Der Stößel 10 ist - eventuell an seinen Enden mit den Zwischenstücken 12, 13 verlängert - sowohl auf dem Kraftmesselement 13 als auch auf der Trennmembran 4 quasi schwimmend gelagert. Die Zwischenstücke 12, 13 sind also an den Stößel 10, nicht aber an das Kraftmesselement 13 oder an die Trennmembran angelötet.

Die einzelnen Zwischenstücke 11, 12, 23 und auch ein in Fig. 1 zwischen Trennmembran 4 und Keramikröhrchen 15 angedeutete weiteres Zwischenstück 24 sind bei weiteren Ausführungsformen, wie beispielsweise in Fig. 5 gezeigt, auch entbehrlich. Das aus Nichtmetall, nämlich Keramik, gebildeten Distanzelement 9 ist dann direkt mit der Trennmembran 4 und dem Kraftmesselement 13 durch Hartlöten verbunden; der Stößel 9 liegt direkt einerseits auf der Trennmembran 4, andererseits auf dem Kraftmesselement 13 auf.

Zum Hartlöten wird ein Aktivlot auf Basis eines Silberlots, einer CuSnTi-Legierung oder einer Ag4Ti-Legierung basierendes Lot eingesetzt. Insbesondere bei letzterem wird, wenn der Kupferanteil nicht ausreicht, als Haftvermittler ein Kupferplättchen eingesetzt.

Die Verbundkonstruktion 3 wird im Vakuum (oder alternativ in Edelgasatmosphäre) hartgelötet. Dabei soll möglichst wenig Gefügeänderung auftreten. Aus diesem Grunde werden angrenzend zu den Keramikmaterialien besondere Werkstoffe, d. h. insbesondere spezielle Stähle eingesetzt. Demgemäss bestehen die Zwischenstücke 11, 12 und 23, 24 aus blei- und schwefelarmem Stahl (z. B. 1.4571) ohne Sigma-Phase, d. h. ohne Versprödung. Durch das Hartlötverfahren bei ca 1.200°C ergibt sich ein integriertes Härten und eine hohe Festigkeit der Verbundkonstruktion 3. Das Sensorgehäuse 2 besteht ebenfalls aus einem solchen Stahl.

Die Trennmembran 4 besteht aus einem hochzähen Stahl, der bei 500°C bis 600°C noch gute maximale Spannungswerte hat, beispielsweise eine Chrom-Nickel-Legierung. Um die Temperaturabhängigkeit klein zu halten, soll die Trennmembran 4 möglichst dünn sein, typisch sind 0,3 - 0,5 mm Dicke. Als Beschichtung zum Schutz gegen Verzundung und Oxidation wird eine Oxidationsschutzschicht von 3 - 4 µm Dicke aus Titanium-Aluminium-Nitrid (Multilayer-Schicht) aufgetragen.

Durch das Hartlöten müssen die einzelnen Elemente 4, 9, 10 und 13, die zur Kraftmessung dienen, nicht durch weitere Maßnahmen zusammengespannt werden. Die Verwendung der Keramik ermöglicht eine Trennung der Kraftmessung von dem Sensoraußengehäuse 2 und den im zu messenden Raum herrschenden hohen Temperaturen. Extra-Maßnahmen zur Kühlung wie zum Beispiel das Vorsehen von Kühlrippen sind entbehrlich. Dennoch ist der Drucksensor relativ kompakt aufbaubar (weniger als halb so groß wie die derzeit auf dem Markt befindlichen Drucksensoren). Das Keramikmaterial schafft eine Trennung von mindestens 25 - 30 mm, abhängig von den Keramikeigenschaften. Auch sind der Stößel 10 und das Röhrchen 15 mit geringem Spalt (weniger als 1 mm typischerweise 0,1 mm) dazwischen angeordnet. Die Keramik beruht auf Zirkonoxyd-Materialien und hält hohen Temperaturen auch über lange Betriebszeiten stand.

### Zur Herstellung des Drucksensors 1 wird wie folgt verfahren:

Die Trenmembran 4 wird komplett mit der Oxidationsschicht beschichtet. Dies vermeidet Verzundung, erhöht die Lebensdauer und bietet einen Oxidationsschutz bei Arbeitstemperaturen bis 800°C bei einer Mikrohärte von 3000 Hv. Zum Hartlöten werden Aktivlote in Form von Folien oder Pasten auf die Trennfugen zwischen den zu lötenden Materialien aufgetragen. Die einzelnen Elemente werden mittels Graphitstangen oder entsprechenden graphitischen Rundstrukturen positioniert, die Trennmembran 4 wird mittels eines Lasers auf die äußere Keramik, d. h. bei Fig. 1 auf eine durch das vierte Zwischenstück 24 erfolgte Verlängerung derselben festgeschweißt (geheftet).

Die Lötung erfolgt im Vakuum bei Temperaturen über 800 - 1000°C.

Der in Figur 5 gezeigte Drucksensor 1 unterscheidet sich von dem Drucksensor gemäß Fig. 1 durch Weglassen der Zwischenstücke 12, 23 und 24. Die Trennmembran 4 ist direkt auf die Keramik des Distanzelementes 9 aufgelötet.

Die hier beschriebenen Drucksensoren 1 sind für Druckmessungen bis zu 250 bar ausgelegt und werden zum Aufbau einer Vorrichtung zur Drucküberwachung in einem Brennraum eines Verbrennungsmotors direkt in die Brennraumkammer eingeschraubt. Wesentliche Merkmale dieser Anwendung sind dabei hohe Temperaturbeständigkeit (bis zu 550°C Mitteltemperatur am Eingang), hohe Wechsellastfestigkeit (mindestens 20.000 Betriebsstunden) und ein hoher Frequenzgang (von über 30 KHz). Zum Einsatz kommen bei den hier beschriebenen Drucksensoren eine brennraumbündig eingebaute und beschichtete Trennmembran 4 sowie eine keramisch ausgeführte Distanzierung 9, 10 zu dem eigentlich messenden Druck- oder Kraftaufnehmer (hier: Kraftmesselement 13) aus Stahl oder Keramik in Dünnschichttechnologie oder Dickschichttechnologie.

Zur Produktion wird der Drucksensor 1 zunächst in der zuvor beschriebenen Weise mechanisch aufgebaut, dann im thermisch belasteten Zustand gegen einen Referenzsensor vermessen und die Abweichungen werden anschließend mit einer nachfolgenden Digitalelektronik kompensiert. Als Ausgang einer aus dem Drucksensor und dessen Digitalund/oder Auswerteelektronik aufgebauten Vorrichtung zur fortwährenden Brennraumdruckmessung im Betrieb einer Verbrennungskraftmaschine erhält man normierte elektronische Ausgangssignale.

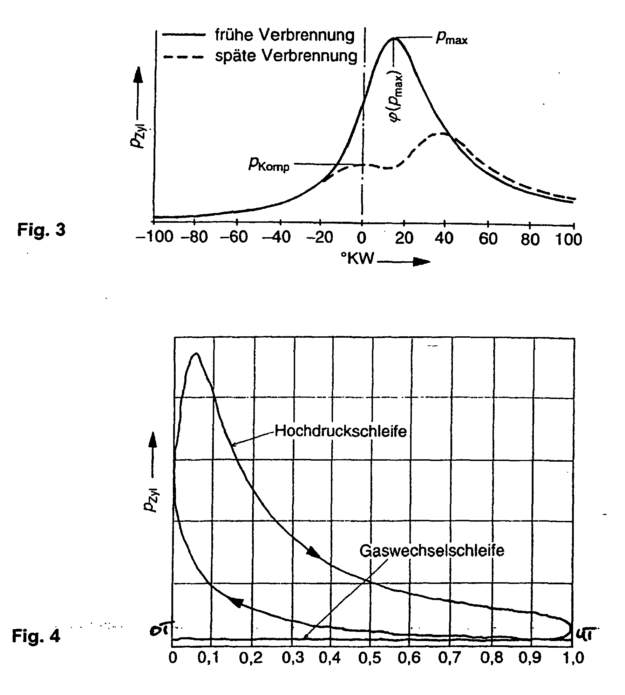

Mit einer solchen Vorrichtung lässt sich fortwährend der Druckverlauf im Zylinder eines Verbrennungskraftmotors wie beispielsweise eines Schiffsmotors messen. Diese Zylinderdruckmessung ist eine dynamische Druckmessung eines zyklisch pulsierenden heißen Gases und ist in den Figuren 3 und 4 schematisch dargestellt. Der Druck der Gassäule schwankt bei Diesel- und Gasmotoren für den Schiff- und Kraftwerksbetrieb zwischen 0 und 250 bar. Die mit den zuvor beschriebenen Drucksensoren und deren Auswerteelektronik mögliche "Online-Motorenüberwachung" wird vermutlich aus mehreren Gründen in Zukunft an Bedeutung gewinnen. Sie ermöglicht die Leistungsmessung in einem einzelnen Zylinder, kann zur Optimierung der Leistung und des Treibstoffverbrauches (über die Begrenzung des Spitzendruckes und die Steuerung des Verbrennungszeitpunktes) eingesetzt werden und detektiert darüber hinaus Ventilschäden, Druckverluste, Fehlzündungen sowie Klopfverhalten des Motors.

Bei Großmotoren finden sich zum Teil mehr als 16 Zylinder, somit werden bei einer Online-Drucküberwachungsvorrichtung pro Motor entsprechend 16 Online-Drucksensoren eingesetzt sowie per Elektronik mit entsprechender Software ausgewertet.

Normalerweise untersucht man bei einer Leistungsanalyse das Verhalten des Druckes P_{Zyl} aufgetragen über den Kurbelwellenwinkel °KW bzw. früher über das Volumen. In Fig. 3 und 4 ist dabei mit OT der obere Totpunkt und mit UT der untere Totpunkt bezeichnet. "P_{Komp}" bezeichnet den Kompessionsdruck "Pₘₐₓ" den Maximaldruck und ϕ (pₘₐₓ) bezeichnet den Winkel, bei dem dieser Maximaldruck auftritt. Die Leistung des Motors ergibt sich aus dem Integral über die Fläche der (theoretisch) geschlossenen Kurve.

Es sind somit ein Verfahren zur Herstellung von Drucksensorelementen, damit hergestellte Drucksensoren und mit letzteren versehene Drucküberwachungsvorrichtungen und Motoren beschrieben worden, die eine Druckerfassung in einem Motorenbrennraum ermöglichen, und zwar über eine vom Sensoraußengehäuse 2 entkoppelte Kraftmessung in der Art, dass die Durchbiegung einer speziell beschichteten Trennmembran 4 auf einen Nichtmetall-Stößel einwirkt, dessen Bewegung wiederum mit einen Kraft- oder Druckaufnehmer 13 detektiert werden. Die Front- oder Trennmembran 4 wird vorzugsweise mit einer Titan-Aluminium-Nitrit-Legierung beschichtet. Die konstruktive Entkoppelung geschieht über ein Metall-Nichtmetall-Hartlotverfahren, insbesondere ein Metall-Keramik-Aktivlotverfahren.

## Patentansprüche

1. Drucksensor (1) zur Druckerfassung in einem Brennraum einer Verbrennungskraftmaschine während deren Betrieb, mit einem äußeren Sensorgehäuse (2), das an einem ersten, dem Brennraum zuzuwendenden Ende (5) durch eine druckaufnehmende Trennmembran (4) verschlossen ist und in dessen Inneren ein keramischer Stößel (10) und ein Kraftmesselement (13) untergebracht ist, wobei der keramische Stößel (10) Auslenkungen der Trennmembran (4) auf das Kraftmesselement (13) überträgt,
**dadurch gekennzeichnet,**
**dass** das Kraftmesselement (13) an einem aus Keramik gebildeten, innerhalb des Sensorgehäuses (2) befindlichen Distanzelement (9) zur Entkopplung der Kraftmessung von dem Sensorgehäuse (2) befestigt ist, das anderen Endes im Bereich des ersten Endes (5) des Sensorgehäuse (2) an diesem befestigt ist.

2. Drucksensor nach Anspruch 1,
**dadurch gekennzeichnet,**
**dass** das Distanzelement (9) eine Keramikhülse oder ein keramisches Röhrchen (15) mit einer Durchgangsöffnung (22) ist oder aufweist, durch die der Stößel (10) geführt ist.

3. Drucksensor nach einem der voranstehenden Ansprüche,
**dadurch gekennzeichnet,**
**dass** das Distanzelement (9) durch Hartlöten direkt oder indirekt an das vorzugsweise aus Metall gebildete Sensoraußengehäuse (2) angelötet ist.

4. Drucksensor nach einem der voranstehenden Ansprüche,
**dadurch gekennzeichnet,**
**dass** das vorzugsweise aus Metall gebildete Kraftmesselement (13) oder ein vorzugsweise aus Metall gebildetes erstes Zwischenstück (11) zwischen dem Distanzelement (9) und dem Kraftmesselemeht (13) durch Hartlöten an das Distanzelement (9) angelötet ist.

5. Drucksensor nach einem der voranstehenden Ansprüche,
**dadurch gekennzeichnet,**
**dass** der keramische Stößel (10), insbesondere mit einer Vorspannung zwischen der Innenseite der Trennmembran (4) und dem Kraftmesselement (13) eingespannt oder verklemmt ist.

6. Drucksensor nach einem der voranstehenden Ansprüche,
**dadurch gekennzeichnet,**
**dass** zumindest die dem zu messenden Medium zuzuwendende Seite der vorzugsweise aus Metall gebildeten Trennmembran (4) mit einer TiAINi-Mehrlageschutzschicht, mit Titan-Aluminium-Nitrit oder mit Titan-Aluminium-Nitrid beschichtet ist.

7. Drucksensor nach einem der voranstehenden Ansprüche,
**dadurch gekennzeichnet,**
**dass** das Kraftmesselement (13) eine Messmembran (16) aus vorzugsweise hochfestem Stahl ist oder aufweist, die zwischen einem ersten, direkt oder indirekt an dem Distanzelement (9) befestigten Befestigungsbereich (17) und einem zweiten, direkt oder indirekt an dem Stößel (10) angreifenden Befestigungsbereich (18) wenigstens einen gegenüber diesen Befestigungsbereichen (17, 18) dünner ausgeführten Zwischenbereich (19) aufweist, an dem eine Verbiegung der Messmembran (16) durch Einwirkung des Stößels (10) ermöglicht ist und der mit Dehnmessstreifen (20) zur Erfassung der Verbiegung versehen ist.

8. Drucksensor nach einem der voranstehenden Ansprüche,
**dadurch gekennzeichnet,**
**dass** das Sensorgehäuse (2) an dem ersten Ende (5) ein Gewinde (15) zum Einschrauben in einen Motorzylinder und, vorzugsweise an dem gegenüberliegenden zweiten Ende (7), einen Werkzeugangriffsbereich aufweist, insbesondere einen Sechskant (8), über den der Drucksensor (1), insbesondere mit Hilfe eines Drehmomentschlüssels, zum Einschrauben erfassbar ist.

9. Drucksensor nach einem der voranstehenden Ansprüche,
**dadurch gekennzeichnet,**
**dass** das Sensorgehäuse (2) an dem ersten Ende (5) mit einem Bodenbereich (14) versehen ist, an welchem das Distanzelement (9) und die Trennmembran (4) befestigt ist.

10. Drucksensor nach einem der voranstehenden Ansprüche,
**dadurch gekennzeichnet,**
**dass** das Kraftmesselement (13) über einen als ein erstes Zwischenstück eingesetzten Ring (11) an dem Distanzelement (9) indirekt befestigt ist und über ein zweites Zwischenstück (12) an dem der Trennmembran (4) abgewandten Ende des Stößels (10) indirekt angreift.

11. Drucksensor nach einem der voranstehenden Ansprüche,
**dadurch gekennzeichnet,**
**dass** an oder nahe dem Kraftmesselement (13) eine - vorzugsweise gedruckte - Auswerteschaltung (21), insbesondere Brückenschaltung, vorgesehen ist.

12. Drucksensor nach einem der voranstehenden Ansprüche,
**dadurch gekennzeichnet,**
**dass** der keramische Stößel (10) und/oder das keramische Distanzelement (9) zumindest über eine von der Trennmembran (4) zum Kraftmesselement (13) zu messende Länge von gleich oder mehr als 25 - 30 mm ausschließlich in Keramik ausgeführt ist.

13. Drucksensor nach einem der voranstehenden Ansprüche,
**dadurch gekennzeichnet,**
**dass** der keramische Stößel (10) und/oder das keramische Distanzelement (9) ganz oder teilweise unter Verwendung von Zirkonoxid-Materialien oder von Glaskeramik aufgebaut ist.

14. Drucksensor nach einem der voranstehenden Ansprüche,
**dadurch gekennzeichnet,**
**dass** der Stößel (10) durch eine Durchgangsöffnung (22) durch das Distanzelement (9) derart hindurchgeführt ist, dass zwischen Stößel (10) und Distanzelement (9) nur ein geringer Spalt, vorzugsweise von weniger als 1 mm, insbesondere von weniger als 0,3 - 0,2 mm, verbleibt.

15. Drucksensor nach einem der voranstehenden Ansprüche,
**dadurch gekennzeichnet,**
**dass** die Trennmembran (4) teilweise oder vorzugsweise vollständig mit einer Oxidationsschutz-Oberflächenbeschichtung mit einer Dicke von ca. 2 bis 6 µm, vorzugsweise 3 bis 4 µm, einer Mikrohärte von 2000 bis 4000 Hv, vorzugsweise ca. 3000 Hv, und einer Temperaturwiderstandsfähikeit bis ca. wenigstens 600°C, vorzugsweise bis 800°C, versehen ist.

16. Drucksensor (1), vorzugsweise nach einem der voranstehenden Ansprüche, zur Druckerfassung in einem Brennraum einer Verbrennungskraftmaschine während deren Betrieb, mit einem äußeren Sensorgehäuse (2), das an einem ersten, dem Brennraum zuzuwendenden Ende (5) durch eine druckaufnehmende Trennmembran (4) verschlossen ist und in dessen Inneren ein temperaturbeständiger, schlecht wärmeleitender Stößel (10) und ein Kraftmesselement (13) untergebracht ist, wobei der Stößel (10) Auslenkungen der Trennmembran (4) auf das Kraftmesselement (13) überträgt,
**dadurch gekennzeichnet,**
**dass** der Stößel (10) und das Kraftmesselement (13) Teile einer in dem Sensorgehäuse (2) untergebrachten hart- oder vakuumgelöteten Nichtmetall-Metall-Verbundkonstruktion (3) sind, die zur Entkopplung der Kraftmessung von dem Sensorgehäuse dient und ein Nichtmetall-Distanzelement (9) enthält, das zwischen dem die Trennmembran (4) aufweisenden Endbereich (5) des Sensorgehäuse (2) einerseits und dem Kraftmesselement (13) andererseits eingesetzt ist.

17. Drucksensor nach Anspruch 16,
**dadurch gekennzeichnet,**
**dass** die an die Nichtmetalle angrenzenden Metallteile (11. 12, 23, 24) der Verbundkonstruktion (3) und/oder an die Verbundkonstruktion (3) angelöteten Metallteile (14) des Drucksensors (1) aus blei- und schwefelarmen Stahl, insbesondere 1.4571-Stahl, ohne Sigma-Phase gebildet sind.

18. Drucksensor nach einem der voranstehenden Ansprüche,
**dadurch gekennzeichnet,**
**dass** das Distanzelement (9) mittels eines Aktivlots an das Sensorgehäuse (2) bzw. die Trennmembran (4) und/oder an das Kraftmesselement (13) direkt oder indirekt angelötet ist.

19. Drucksensor nach Anspruch 18,
**dadurch gekennzeichnet,**
**dass** das Aktivlot auf einer Silber-Legierung, einer Silber-Kupfer-Legierung oder einer Kupfer-Zinn-Legierung basiert und jeweils ein Legierungselement - insbesondere Titan-, das an der Grenzfläche Lot-Keramik eine Reaktionsschicht zum Herbeiführen der Lotverbindung bildet, enthält.

20. Drucksensor nach einem der Ansprüche 18 oder 19,
**dadurch gekennzeichnet,**
**dass** das Aktivlot CuSnTi, Silberlot, vorzugsweise cadmiumfreies Silberhartlot, oder/und Ag4Ti enthält.

21. Drucksensor nach einem der voranstehenden Ansprüche,
**gekennzeichnet durch** eine Keramik-Metall-Lotverbindung zum Verlöten des Distanzelements (9) enthaltend ein Lot mit einer Löttemperatur oberhalb von etwa 800°C.

22. Verfahren zum Herstellen eines Drucksensors (1) nach einem der voranstehenden Ansprüche,
umfassend die Schritte:
a) Bereitstellen eines Stößels (10) aus Keramik, eines Distanzelements (9) aus Keramik mit einer Durchgangsöffnung (22), einer Trennmembran (4) aus Metall, eines Kraftmesselements (13) aus Metall oder Keramik und eines äußeren Sensorgehäuses (2) aus Metall,
b) Einsetzen des Stößels (10) in die Durchgangsöffnung (22),
c) direktes oder indirektes Hartlöten eines Endes des Distanzelements (9) an das Kraftmesselement (13), und
d) direktes oder indirektes Hartlöten des anderen, gegenüberliegenden Endes des Distanzelements (9) an den zur Anordnung in einem Brennraum einer Verbrennungskraftmaschine ausgebildeten Boden (14) des Sensorgehäuses (2),
wobei die Reihenfolge der Schritte b)-d) beliebig ist.

23. Verfahren nach Anspruch 22,
**dadurch gekennzeichnet,**
**dass** der Stößel (10) direkt oder unter Verwendung von an die Stößelenden befestigten, insbesondere angelöteten Zwischenstücken (12, 23) schwimmend zwischen der Trennmembran (4) und dem Kraftmesselement (13) eingespannt wird.

24. Verfahren nach einem der voranstehenden Ansprüche,
**dadurch gekennzeichnet,**
**dass** das Hartlöten bei einer Löttemperatur von über ca. 1000°C, vorzugsweise bei ca. 1200°C ± 100°C erfolgt.

25. Verfahren nach einem der voranstehenden Ansprüche,
**dadurch gekennzeichnet,**
**dass** beim Hartlöten Kupfer-Plättchen zur Haftvermittlung und/oder zur gezielten Korrektur von Wärmeausdehnungen an den Fügeflächen verwendet werden.

26. Verfahren nach einem der voranstehenden Ansprüche,
**dadurch gekennzeichnet,**
**dass** beim Hartlöten Graphitstäbe als Werkzeug eingesetzt werden.

27. Verfahren nach einem der voranstehenden Ansprüche,
**dadurch gekennzeichnet,**
**dass** als Materialien der durch das Hartlöten miteinander zu verbindenden Teile (2, 13, 4; 11, 24; 9) einerseits blei- und schwefelarmer Stahl, insbesondere ohne Sigma-Phase, d.h. ohne Versprödung, und andererseits auf Zirkoniumoxid-Materialien oder Glaskeramik basierende Keramiken eingesetzt werden.

28. Verfahren nach einem der voranstehenden Ansprüche,
**dadurch gekennzeichnet,**
**dass** zumindest der dem zu messenden Medium auszusetzende Oberflächenbereich der Trennmembran (4) mit einer Titan-Aluminium-Nitrid-Beschichtung von ca. 2-6 µm Dicke beschichtet wird.

29. Verfahren nach einem der voranstehenden Ansprüche,
**dadurch gekennzeichnet,**
**dass** der Drucksensor (1) nach seinem mechanischen Zusammenbau im thermisch belasteten Zustand gegenüber einem Referenzsensor vermessen wird und Abweichungen anschließend mit einer dem Drucksensor (1) zugeordneten digitalen Elektronik kompensiert werden.

30. Vorrichtung zur Überwachung des Brennraumdruckes in einer Verbrennungskraftmaschine,
**gekennzeichnet durch**
einen Drucksensor nach einem der Ansprüche 1 bis 21.

31. Verbrennungskraftmaschine
**gekennzeichnet durch**
einen Drucksensor (1) nach einem der Ansprüche 1 bis 21 zur ständigen Brennraumdrucküberwachung und/oder durcheine Vorrichtung nach Anspruch 30.

## Claims

1. Pressure sensor (1) for detecting the pressure in a combustion chamber of an internal combustion engine during operation thereof, having an outer sensor housing (2) which is closed off by a pressure-absorbing separating membrane (4) at a first end (5) intended to face the combustion chamber, and inside which are accommodated a ceramic ram (10) and a force measuring element (13), the ceramic ram (10) transmitting any deflections of the separating membrane (4) to the force measuring element (13),
**characterised in that**
the force measuring element (13) is attached to a spacer element (9) made of ceramics and located inside the sensor housing (2), for isolating the measurement of force from the sensor housing (2), which at the other end is attached to the sensor housing (2) in the region of the first end (5) thereof.

2. Pressure sensor according to claim 1,
**characterised in that**
the spacer element (9) is or comprises a ceramic sleeve or a ceramic tube (15) with a through-opening (22) through which the ram (10) is guided.

3. Pressure sensor according to one of the preceding claims,
**characterised in that**
the spacer element (9) is soldered directly or indirectly by hard soldering onto the outer sensor housing (2) which is preferably made of metal.

4. Pressure sensor according to one of the preceding claims,
**characterised in that**
the force measuring element (13) preferably made of metal or a first intermediate member (11) preferably made of metal between the spacer element (9) and the force measuring element (13) is soldered to the spacer element (9) by hard soldering.

5. Pressure sensor according to one of the preceding claims,
**characterised in that**
the ceramic ram (10) is clamped or secured, particularly under pre-stressing, between the inside of the separating membrane (4) and the force measuring element (13).

6. Pressure sensor according to one of the preceding claims,
**characterised in that**
at least that side of the preferably metal separating membrane (4) intended to face the medium that is to be measured is coated with a multi-layer protective coating of TiA1Ni, with titanium-aluminium-nitrite or with titanium-aluminium-nitride.

7. Pressure sensor according to one of the preceding claims,
**characterised in that**
the force measuring element (13) is or comprises a measuring membrane (16) made of preferably high-strength steel, which comprises, between a first fixing region (17) attached directly or indirectly to the spacer element (9) and a second fixing region (18) acting directly or indirectly on the ram (10), at least one intermediate region (19) which is thinner than these fixing regions (17, 18), on which it is possible to deform the measuring membrane (16) by the action of the ram (10) and which is provided with strain-gauge strips (20) for determining the deformation.

8. Pressure sensor according to one of the preceding claims,
**characterised in that**
the sensor housing (2) comprises at its first end (5) a thread (15) for screwing into an engine cylinder and, preferably at the opposite second end (7), a tool engagement region, particularly a hexagon (8) by means of which the pressure sensor (1) can be gripped for screwing tight, particularly using a torque wrench.

9. Pressure sensor according to one of the preceding claims,
**characterised in that**
the sensor housing (2) is provided at its first end (5) with a base region (14) to which the spacer element (9) and separating membrane (4) are attached.

10. Pressure sensor according to one of the preceding claims,
**characterised in that**
the force measuring element (13) is indirectly attached to the spacer element (9) by means of a ring (11) inserted as a first intermediate member, and engages indirectly via a second intermediate member (12) on the end of the ram (10) remote from the separating membrane (4).

11. Pressure sensor according to one of the preceding claims,
**characterised in that**
on or near the force measuring element (13) is provided a - preferably printed - evaluating circuit (21), particularly a bridge circuit.

12. Pressure sensor according to one of the preceding claims,
**characterised in that**
the ceramic ram (10) and/or the ceramic spacer element (9) is constructed exclusively of ceramics at least over a length greater than or equal to 25 - 30 mm, to be measured from the separating membrane (4) to the force measuring element (13).

13. Pressure sensor according to one of the preceding claims,
**characterised in that**
the ceramic ram (10) and/or the ceramic spacer element (9) is constructed wholly or partly using zirconium oxide materials or glass ceramics.

14. Pressure sensor according to one of the preceding claims,
**characterised in that**
the ram (10) is guided through an opening (22) passing right through the spacer element (9), such that only a small gap, preferably less than 1 mm, particularly less than 0.3 to 0.2 mm, is left between the ram (1) and spacer element (9).

15. Pressure sensor according to one of the preceding claims,
**characterised in that**
the separating membrane (4) is provided with a partial or, preferably, total anti-oxidation surface coating approx. 2 to 6 µm thick, preferably 3 to 4 µm thick, with a microhardness of 2000 to 4000 Hv, preferably about 3000 Hv, and a temperature resistance of up to at least 600°C, preferably up to 800°C.

16. Pressure sensor (1), preferably according to one of the preceding claims, for detecting the pressure in a combustion chamber of an internal combustion engine during operation thereof, having an outer sensor housing (2) which is closed off by a pressure-absorbing separating membrane (4) at a first end (5) arranged to face the combustion chamber, and inside which are accommodated a temperature-resistant ceramic ram (10) which is a poor conductor of heat and a force measuring element (13), the ceramic ram (10) transmitting any deflections of the separating membrane (4) to the force measuring element (13),
**characterised in that**
the ram (10) and the force measuring element (13) are parts of a hard-soldered or vacuum-soldered non-metal/metal composite construction (3) accommodated in the sensor housing (2), said construction (3) serving to isolate the measurement of force from the sensor housing and containing a non-metallic spacer element (9) which is inserted between the end region (5) of the sensor housing (2) comprising the separating membrane (4), on the one hand, and the force measuring element (13), on the other hand.

17. Pressure sensor according to claim 16,
**characterised in that**
the metal parts (11, 12, 23, 24) of the composite construction (3) adjacent to the non-metallic parts and/or the metal parts (14) of the pressure sensor (1) soldered to the composite construction (3) are made of low-lead and low-sulphur steel, particularly 1.4571 steel, without a sigma phase.

18. Pressure sensor according to one of the preceding claims,
**characterised in that**
the spacer element (9) is soldered directly or indirectly to the sensor housing (2) or the separating membrane (4) and/or to the force measuring element (13) by means of an active solder.

19. Pressure sensor according to claim 18,
**characterised in that**
the active solder is based on a silver alloy, a silver-copper alloy or a copper-tin alloy and in each case contains an alloy element - particularly titanium - which forms a reactive layer for producing the soldered joint at the solder/ceramic interface.

20. Pressure sensor according to one of claims 18 or 19,
**characterised in that**
the active solder contains CuSnTi, silver solder, preferably cadmium-free silver hard solder, and/or Ag4Ti.

21. Pressure sensor according to one of the preceding claims,
**characterised by** a ceramic-metal solder joint for soldering the spacer element (9) containing a solder with a soldering temperature above about 800°C.

22. Method of producing a pressure sensor (1) according to one of the preceding claims,
comprising the steps of:
a) producing a ram (10) of ceramics, a spacer element (9) of ceramics with a through-opening (22), a separating membrane (4) of metal, a force measuring element (13) of metal or ceramics and an outer sensor housing (2) of metal,
b) inserting the ram (10) in the through-opening (22),
c) directly or indirectly hard soldering one end of the spacer element (9) to the force measuring element (13), and
d) directly or indirectly hard soldering the other, opposite end of the spacer element (9) to the base (14) of the sensor housing (2) which is shaped so as to be accommodated in a combustion chamber of an internal combustion engine,
steps b)-d) being carried out in any desired order.

23. Method according to claim 22,
**characterised in that**
the ram (10) is clamped so as to float between the separating membrane (4) and the force measuring element (13), directly or using intermediate members (12, 23) attached, particularly soldered, to the ends of the ram.

24. Method according to one of the preceding claims,
**characterised in that**
the hard soldering is carried out at a soldering temperature in excess of about 1000°C, preferably about 1200°C ± 100°C.

25. Method according to one of the preceding claims,
**characterised in that**
small copper plates are used in the hard soldering to provide adhesion and/or to achieve controlled correction of heat expansion at the joined surfaces.

26. Method according to one of the preceding claims,
**characterised in that**
graphite rods are used as the tool in the hard soldering.

27. Method according to one of the preceding claims,
**characterised in that**
the materials used for the parts (2, 13, 4; 11, 24, 9) which are to be joined together by the hard soldering are, on the one hand, low-lead and low-sulphur steel, particularly without a sigma phase, i.e. with no embrittlement, and on the other hand ceramics based on zirconium oxide materials or glass ceramics.

28. Method according to one of the preceding claims,
**characterised in that**
at least the part of the surface of the separating membrane (4) that is to be exposed to the medium which is to be measured is coated with a titanium-aluminium-nitride coating about 2 to 6 µm thick.

29. Method according to one of the preceding claims,
**characterised in that**
the pressure sensor (1) after being mechanically assembled is measured against a reference sensor in the thermally loaded state and deviations are subsequently compensated using digital electronics associated with the pressure sensor (1).

30. Device for monitoring the combustion chamber pressure in an internal combustion engine,
**characterised by**
a pressure sensor according to one of claims 1 to 21.

31. Internal combustion engine,
**characterised by**
a pressure sensor according to one of claims 1 to 21 for constantly monitoring the combustion chamber pressure, and/or by a device according to claim 30.

## Revendications

1. Capteur de pression (1) pour capter la pression dans la chambre de combustion d'un moteur à combustion pendant son fonctionnement, comprenant un boîtier extérieur (2) dont la première extrémité (5) tournée vers la chambre de combustion est fermée par une membrane de séparation (4) recevant la pression et reçoit à l'intérieur, un poussoir en céramique (10) et un élément de mesure de force (13), le poussoir en céramique (10) transmettant les mouvements de déflection de la membrane de séparation (4) vers l'élément de mesure de force (13),
**caractérisé en ce que**
l'élément de mesure de force (13) est fixé à un élément d'écartement (9) en céramique, logé dans le boîtier de capteur (2) pour découpler la mesure de la force par rapport au boîtier de capteur (2), l'autre extrémité de cet élément étant fixée au boîtier de capteur (2) au niveau de sa première extrémité (5).

2. Capteur de pression selon la revendication 1,
**caractérisé en ce que**
l'élément d'écartement (9) est ou comporte un manchon en céramique ou un petit tube en céramique (15) avec un orifice de passage (22) traversé par le poussoir (10).

3. Capteur de pression selon l'une des revendications précédentes,
**caractérisé en ce que**
l'élément d'écartement (9) est soudé par une brasure forte, directement ou indirectement au boîtier extérieur (2) du capteur, de préférence en métal.

4. Capteur de pression selon l'une des revendications précédentes,
**caractérisé en ce que**
l'élément de mesure de force (13), réalisé de préférence en métal, ou une première pièce intermédiaire (11), de préférence en métal, est soudé entre l'élément d'écartement (9) et l'élément de mesure de force (13) par brasure forte sur l'élément d'écartement (9).

5. Capteur de pression selon l'une des revendications précédentes,
**caractérisé en ce que**
le poussoir en céramique (10) est encastré ou serré, notamment avec précontrainte, entre la face intérieure de la membrane de séparation (4) et l'élément de mesure de force (13).

6. Capteur de pression selon l'une des revendications précédentes,
**caractérisé en ce qu'**
au moins le côté de la membrane de séparation (4), de préférence en métal, côté tourné vers le fluide à mesurer, est revêtu d'un revêtement à couches multiples TiA1Ni, avec titane-aluminium-nitrure ou titane-aluminium-nitride.

7. Capteur de pression selon l'une des revendications précédentes,
**caractérisé en ce que**
l'élément de mesure de force (13) comporte une membrane de mesure (13) de préférence en acier très résistant ou comportant de l'acier très résistant, cette membrane ayant, entre une première zone de fixation (17), fixée directement ou indirectement à l'élément d'écartement (9), et une seconde zone de fixation (18) reliée directement ou indirectement au poussoir (10), au moins une zone intermédiaire (19) plus mince que les zones de fixation (17, 18), zone intermédiaire qui permet le fléchissement de la membrane de mesure (16) par l'action du poussoir (10) et comporte des jauges de contrainte (20) pour saisir le fléchissement.

8. Capteur de pression selon l'une des revendications précédentes,
**caractérisé en ce que**
son boîtier (2) comporte à la première extrémité (5), un filetage (5) pour être vissé dans un cylindre du moteur et de préférence à la seconde extrémité opposée (7), une zone de prise d'outil, notamment une forme de six pans (8) par laquelle on peut saisir le capteur de pression (1), notamment à l'aide d'une clé dynamométrique pour le visser.

9. Capteur de pression selon l'une des revendications précédentes,
**caractérisé en ce que**
son boîtier (2) est muni, au niveau de la première extrémité (5), d'une zone de fond (14) à laquelle est fixé l'élément d'écartement (9) et la membrane de séparation (4).

10. Capteur de pression selon l'une des revendications précédentes,
**caractérisé en ce que**
l'élément de mesure de force (13) est fixé indirectement à l'élément d'écartement (9) par une première bague (11) placée dans une première pièce intermédiaire et par une seconde pièce intermédiaire (12) il agit indirectement sur l'extrémité du poussoir (10), à l'opposé de la membrane de séparation (4).

11. Capteur de pression selon l'une des revendications précédentes,
**caractérisé en ce que**
un circuit d'exploitation (21), de préférence un circuit imprimé, notamment un montage en pont est prévu sur ou à proximité de l'élément de mesure de force (13).

12. Capteur de pression selon l'une des revendications précédentes,
**caractérisé en ce que**
le poussoir en céramique (10) et/ou l'élément d'écartement en céramique (9) est relié au moins par une longueur à mesurer entre la membrane de séparation (4) et l'élément de mesure de force (13), égale ou supérieure à 25-30 mm, exclusivement en céramique.

13. Capteur de pression selon l'une des revendications précédentes,
**caractérisé en ce que**
le poussoir en céramique (10) et/ou l'élément d'écartement en céramique (9) sont réalisés en totalité ou en partie avec de l'oxyde de zirconium ou de la céramique vitreuse.

14. Capteur de pression selon l'une des revendications précédentes,
**caractérisé en ce que**
le poussoir (10) passe par un orifice (22) traversant l'élément d'écartement (9), et il ne subsiste qu'un faible intervalle, de préférence inférieure à 1 mm, notamment inférieur à 0,3-0,2 mm entre le poussoir (10) et l'élément d'écartement (9).

15. Capteur de pression selon l'une des revendications précédentes,
**caractérisé en ce que**
la membrane de séparation (4) est munie en partie, de préférence en totalité, d'un revêtement de surface anti-oxydation d'une épaisseur d'environ 2-6 µm, de préférence 3-4 µm, d'une micro-dureté de 2000-4000 Hv, de préférence d'environ 3000 Hv et d'une caractéristique réfractaire allant au moins jusqu'à 600°C, de préférence jusqu'à 800°C.

16. Capteur de pression (1), de préférence selon l'une des revendications précédentes, pour saisir la pression dans la chambre de combustion d'un moteur à combustion au cours de son fonctionnement, comprenant un boîtier extérieur de capteur (2) dont une première extrémité (5) tournée vers la chambre de combustion est fermée par une membrane de séparation (4) recevant la pression et dont l'intérieur loge un poussoir (10) mauvais conducteur de chaleur, dépendant de la température et un élément de mesure de force (13), le poussoir (10) transmettant les déplacements de la membrane de séparation (4) à l'élément de mesure de force (13),
**caractérisé en ce que**
le poussoir (10) et l'élément de mesure de force (13) font partie d'une structure composite métal-non métal (3), soudée sous vide et brasée, logée dans le boîtier de capteur (2), servant à découpler la mesure de la force par rapport au boîtier de capteur et comportant un élément d'écartement (9) non métallique, placé entre d'une part la zone d'extrémité (5) du boîtier de capteur (2) avec la membrane de séparation (4) et d'autre part l'élément de mesure de force (13).

17. Capteur de pression selon la revendication 16,
**caractérisé en ce que**
les parties métalliques (11, 12, 23, 24) adjacentes aux parties non métaux métalliques dans la structure composite (3) et/ou les parties métalliques (14) du capteur de pression (1) soudées sur la structure composite (3) sont en acier à faible teneur en plomb et en soufre, notamment en acier 1.4571, sans phase sigma.

18. Capteur de pression selon l'une des revendications précédentes,
**caractérisé en ce que**
l'élément d'écartement (9) est soudé par une soudure active au boîtier de capteur (2) ou à la membrane de séparation (4) et/ou à l'élément de mesure de force (13) par une soudure directe ou indirecte.

19. Capteur de pression selon la revendication 18,
**caractérisé en ce que**
la soudure active utilise un alliage d'argent, un alliage argent-cuivre ou un alliage cuivre-zinc et comporte chaque fois un élément d'alliage, notamment en titane, qui forme une couche de réaction pour réaliser la liaison de soudure à la surface limite soudure-céramique.

20. Capteur de pression selon l'une des revendications 18 ou 19,
**caractérisé en ce que**
la soudure active contient CuSnTi, de la soudure d'argent, de préférence de la brasure d'argent sans cadmium et/ou Ag4Ti.

21. Capteur de pression selon l'une des revendications précédentes,
**caractérisé par**
une liaison soudée céramique-métal pour souder l'élément d'écartement (9) avec une soudure dont la température de soudage est supérieure à environ 800°C.

22. Procédé de réalisation d'un capteur de pression (1) selon l'une des revendications précédentes, comprenant les étapes suivantes :
a) développer un poussoir (10) en céramique, un élément d'écartement (9) en céramique avec un orifice de passage (22), une membrane de séparation (4) en métal, un élément de mesure de force (13) en métal ou en céramique et un boîtier de capteur (2), extérieur, en métal,
b) installer le poussoir (10) dans l'orifice de passage (22),
c) braser par une brasure forte, directement ou indirectement, une extrémité de l'élément d'écartement (9) à l'élément de mesure de force (13) et
d) braser par une brasure forte directement ou indirectement l'autre extrémité opposée de l'élément d'écartement (9) au fond (14) du boîtier de capteur (2), réalisée pour être installée dans la chambre de combustion d'un moteur à combustion,
la succession des étapes b)-d) étant faite dans un ordre quelconque.

23. Procédé selon la revendication 22,
**caractérisé en ce que**
le poussoir (10) est serré directement ou en utilisant des pièces intermédiaires (12, 23) fixées aux extrémités du poussoir, notamment soudées, par un serrage flottant entre la membrane de séparation (4) et l'élément de mesure de force (13).

24. Procédé selon l'une quelconque des revendications précédentes,
**caractérisé en ce que**
la brasure forte se fait à une température supérieure à environ 1000°C, de préférence de l'ordre de 1200°C ± 100°C.

25. Procédé selon l'une des revendications précédentes,
**caractérisé en ce que**
pour la brasure forte on utilise des plaquettes de cuivre pour favoriser l'accrochage et/ou pour corriger de manière précise les dilatations thermiques des surfaces d'assemblage.

26. Procédé selon l'une des revendications précédentes,
**caractérisé en ce qu'**
on utilise des tiges de graphite comme outils pour la brasure forte.

27. Procédé selon l'une des revendications précédentes,
**caractérisé en ce que**
comme matière des pièces (2, 13, 4 ; 11, 24 ; 9) à relier par brasure forte on utilise d'une part de l'acier à faible teneur en plomb et en soufre, notamment sans phase sigma, c'est-à-dire sans fragilisation et d'autre part des céramiques à base d'oxyde de zirconium ou des céramiques vitreuses.

28. Procédé selon l'une des revendications précédentes,
**caractérisé en ce qu'**
au moins la zone de surface de la membrane séparatrice (4) exposée au fluide à mesurer est munie d'un revêtement titane-aluminium-nitrure d'une épaisseur de l'ordre de 2-6 µm.

29. Procédé selon l'une des revendications précédentes,
**caractérisé en ce qu'**
après son assemblage mécanique, on mesure le capteur de pression (1) dans son état sollicité thermiquement par rapport à un capteur de référence et on compense ensuite les déviations avec de l'électronique numérique associée au capteur de pression (1).

30. Dispositif pour surveiller la pression de la chambre de combustion dans un moteur à combustion,
**caractérisé par**
un capteur de pression selon l'une des revendications 1-21.

31. Moteur à combustion,
**caractérisé par**
un capteur de pression (1) selon l'une quelconque des revendications 1-21, pour surveiller en permanence la pression dans la chambre de combustion et/ou par un dispositif selon la revendication 30.
